# EUROPÄISCHE PATENTSCHRIFT

(11) **EP 1 828 523 B1**
(45) Veröffentlichungstag und Bekanntmachung des Hinweises auf die Patenterteilung: **11.05.2016**
(21) Anmeldenummer: 05813963.5
(22) Anmeldetag: 19.11.2005
(51) Int. Cl.: E05F 5/10, F16F 9/02, F16F 9/32

(54) **ANSCHLAGDÄMPFER**
END-STOP DAMPER
AMORTISSEUR A BUTEE

(30) Priorität: 14.12.2004 DE 102004060398
(43) Veröffentlichungstag der Anmeldung: 05.09.2007
(73) Patentinhaber: KARL SIMON GmbH & Co. KG, 78733 Aichhalden (DE)
(72) Erfinder: BANTLE, Ulrich, 72186 Empfingen (DE); ESCHLE, Jürgen, 78733 Aichhalden (DE)
(74) Vertreter: Herrmann, Jochen
(86) Internationale Anmeldenummer: PCT/EP2005/012406
(87) Internationale Veröffentlichungsnummer: WO 2006/063657

(56) Entgegenhaltungen:
- EP-A- 0 841 451
- WO-A-03/100287
- WO-A-2005/054614
- DE-A1- 10 251 169
- US-A- 4 110 868
- US-A- 4 877 226
- US-A1- 2002 170 794
- "SHOCK ABSORBER WITH ADDITIONAL BREAK EFFECT" IBM TECHNICAL DISCLOSURE BULLETIN, IBM CORP. NEW YORK, US, Bd. 37, Nr. 7, 1. Juli 1994 (1994-07-01), Seite 143, XP000455466 ISSN: 0018-8689

## Beschreibung

Die Erfindung betrifft einen Anschlagdämpfer mit einem Dämpferkörper, der einen Zylinder aufweist, wobei in einem Aufnahmeraum des Zylinders ein Kolben verstellbar geführt ist, wobei bei Verstellung des Kolbens ein durch den im Aufnahmeraum gebildeten Luftdruck eine auf den Kolben wirkende Bremskraft ausgeübt wird, wobei der Aufnahmeraum zum Abbau des Luftdruckes wenigstens eine Öffnung aufweist, und wobei der Kolben einen Balgabschnitt aufweist, der abhängig von den Druckverhältnissen im Aufnahmeraum in Wirkverbindung mit dem Zylinder steht.

Ein derartiger Anschlagdämpfer ist aus der DE 103 13 659 B3 bekannt. Der Anschlagdämpfer weist einen Zylinder auf, in dem ein Kolben linear verstellbar geführt ist. Der Kolben ist dabei abgedichtet an der Innenwandung des Zylinder geführt, so dass sich zwei Druckräume im Zylinder bilden.

In einem Überdruckraum wird die Luft beim Einfahren des Kolbens komprimiert. Gleichzeitig entsteht in einem Unterdruckraum ein Luftdruck der kleiner ist als der Druck im Überdruckraum. Um einen kontinuierlichen Druckausgleich zwischen diesen beiden Druckräumen stattfinden zu lassen sind Überströmkanäle mit kleinem Querschnitt vorgesehen.

Durch diese strömt die Luft aus dem Überdruckraum dem Unterdruckraum zu. Zur Verstärkung der Bremskraft weist der Kolben einen Balgabschnitt auf. Dieser wird infolge eines zwischen dem Überdruckraum und dem Unterdruckraum anstehenden Differenzdruckes aufgebläht. Er legt sich dabei an die Innenwandung des Zylinders an und erhöht so die Reibung des Kolbens. Der Balgabschnitt ist als Hülse aus einem weichelastischen Material gefertigt. Zur Fixierung des Balgabschnittes ist der Kolben zweiteilig ausgeführt und der Balgabschnitt zwischen den Kolbenteilen eingespannt.

Der bekannte Anschlagdämpfer weist eine Vielzahl von Teilen auf und ist aufwändig zu montieren.

Aus der US 4,877,226 ist ein Anschlagdämpfer bekannt, der einen Zylinder und eine Kolben umfasst. Der Kolben kann gegen die Spannkraft einer Feder in den Aufnahmeraum des Zylinders eingeschoben werden.

Ein weiterer Anschlagdämpfer ist aus der US 4,110,868 bekannt. Auch hier ist ein Kolben-Zylindersystem vorgesehen, wobei der Kolben gegen ein ein Zylinder gehaltenes Luftvolumen verstellt wird. Beim Einschieben des Kolbens in den Zylinder wird ein Überdruck erzeugt, der die Einschiebbewegung des Kolbens dämpft.

Eine ebenfalls auf diesem bekannten Luft-Dämpfungsprinzip arbeitenden Dämpfanordnung ist in der DE 102 051 169 A1 und in der WO 2005/054614 A1 beschrieben. Dabei ist zwischen dem Zylinder und dem Kolben eine Rückstellfeder wirksam, die den Kolben nach einem Dämpfungshub in die Ausgangsstellung zurückstellt. Der Kolben bildet zusammen mit einer Kolbenstange eine Baueinheit.

Die WO 03/100287 A1 und die EP 0841451 A1 offenbart jeweils eine Dämpferanordnung mit einem Kolben und einem Zylinder. Der Kolben ist gegen ein Luftvolumen im Zylinder verstellbar. Der Kolben weist einen Balgabschnitt auf, der sich beim Verstellen des Kolbens aufbläht und bremsend an die Zylinderwandung anlegt.

Die Erfindung sieht weiter vor, dass der Kolbenstange ein Stützkörper zugeordnet ist oder diese einen solchen aufweist, wobei der Stützkörper eine Anschlagseite aufweist, die außerhalb des Dämpferkörpers angeordnet ist, und dass der Stützkörper über einen Absatz an dem Kolben abgestützt ist. Mit dem Stützkörper kann je nach Auslegung die Kolbenstange ausgesteift werden. Gleichzeitig kann über den Stützkörper auch die Aufprallkraft beispielsweise einer auftreffenden Tür oder Klappe aufgenommen und zumindest teilweise direkt in den Kolben übertragen werden.

Dies ist besonders auch dann von Vorteil, wenn vorgesehen ist, dass der Kolben und der Balgabschnitt aus weichelastischem Material bestehen. Dann wird der Kolben von der Aufprallkraft federelastisch beaufschlagt und damit über Hysterese ein Teil der Aufprallkraft vernichtet wird.

Die weichelastische Ausbildung von Kolben und Balgabschnitt ermöglichen auch die Verwirklichung einer Werkstoffpaarung mit dem Zylinder die über hohe Reibwerte eine starke Dämpfung ermöglichen. Wenn auch die Kolbenstange aus einem weichelastischen Material besteht, ist aus Festigkeitsgründen vorgesehen, dass die Kolbenstange mittels eines Mantelteils ausgesteift ist.

Eine denkbare Erfindungsalternative ist dergestalt, dass die Kolbenstange auf ihrer dem Kolben abgewandten Seite ein Prallstück aus weichelastischem Material bildet. Über das Prallstück kann die Aufprallkraft aufgenommen und bereits teilweise gedämpft werden.

Wenn vorgesehen ist, dass der Balgabschnitt einen zylinderförmigen Teil aufweist, der im Abstand zur Innenwandung des Zylinders gehalten ist, und dass der von dem zylinderförmigen Teil umgebene Bereich einem Druckraum des Zylinders zugeordnet ist, dann kann sich der Balgabschnitt bei Druckbeaufschlagung umlaufend an die Innenwandung des Zylinders anlegen und dort eine gleichmäßige und große Bremskraft bewirken.

Die Funktionalität des Balgabschnittes lässt sich noch zusätzlich dann erhöhen, wenn vorgesehen ist, dass der zylinderförmige Teil des Balgabschnittes eine Federaufnahme bildet, in der eine Feder zumindest teilweise aufgenommen ist, und dass die Feder den Kolben entgegen der Einschubbewegung des Kolbens in den Zylinder gegenüber dem Zylinder abstützt.

Eine weitere konstruktive Vereinfachung ergibt sich dadurch, dass der Balgabschnitt ein angeformtes Dichtelement trägt, das einen Druck- und einen Unterdruckraum des Zylinders gegeneinander abdichtet.

Die Bremswirkung des Anschlagdämpfers lässt sich noch dadurch steigern, dass sowohl der Unterdruck-, als auch der Druckraum mittels wenigstens einer Öffnung mit der Umgebung in luftleitender Verbindung stehen.

Dies wird insbesondere dadurch möglich, dass die Öffnungen oder den Öffnungen zugeordnete Drosselglieder so gestaltet sind, dass eine dosierte Luftströmung erzielt ist.

Beispielsweise kann eine Luft-Volumenströmung zu einem kontrollierten Druckabbau und gleichzeitig eine gute Dämpfung erreicht werden, wenn vorgesehen ist, dass wenigstens eine der Öffnungen einen Durchmesser D < 0,2 mm, vorzugsweise < 0,1 mm aufweist. Insbesondere Durchmesser < 0,1 mm zeigen eine gute Drosselwirkung für die Anwendung im Möbelbau.

Diese Dämpfung kann insbesondere auch befriedigend dadurch erreicht werden, dass das Verhältnis der Querschnittsfläche des Kolbens in dem, dem Hohlraum zugewandten Bereich zu dem Öffnungsquerschnitt der Öffnung größer als 4000/1 ist.

Die Erfindung wird im Folgenden anhand eines in den Zeichnungen dargestellten Ausführungsbeispieles näher erläutert. Es zeigen:
- Fig. 1: einen Anschlagdämpfer in Seitenansicht und im Schnitt,
- Fig. 2: eine, in Fig. 1 mit "A" gekennzeichnete Detaildarstellung,
- Fig. 3: eine weitere Ausgestaltung eines Anschlagdämpfers in Seitenansicht und im Schnitt,
- Fig. 4: eine, in Fig. 3 mit "A" gekennzeichnete Detaildarstellung und
- Fig. 5: eine, in Fig. 3 mit "B" gekennzeichnete Detaildarstellung.

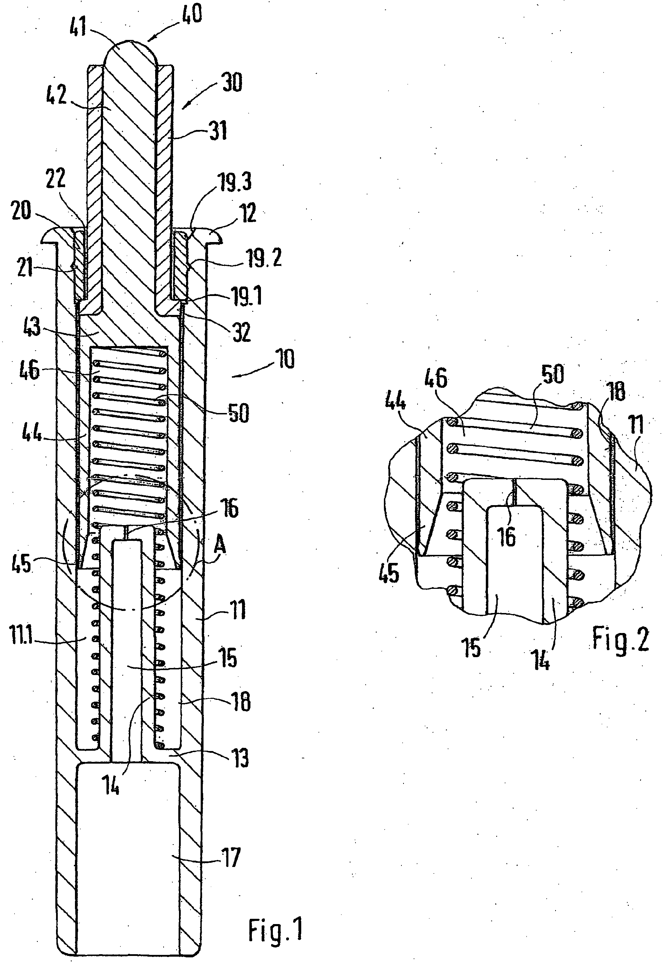

In der Fig. 1 ist ein Anschlagdämpfer mit einem längsgestreckten Dämpferkörper 10 dargestellt. Der Dämpferkörper 10 bildet einen Zylinder 11. Der Zylinder 11 umgibt einen Aufnahmeraum 11.1, in dem ein Kolben 43 eines Gleitelementes 40 linear verstellbar gehalten ist. In den Aufnahmeraum 11.1 ragt eine Federführung 14, die in Form eines Hohlzylinders an einen Boden 13 des Dämpferkörpers 10 einteilig angeformt ist. Im Bereich seiner dem Boden 13 abgewandten Seite weist die Federführung 14 eine Öffnung 16 in Form einer Bohrung auf. Die Öffnung 16 schafft eine räumliche Verbindung zwischen dem Aufnahmeraum 11.1 und einem von der Federführung umgebenen Luftführungskanal 15.

Dabei ist der Durchmesser der Öffnung 16 < 0,1 mm um einen dosierten Luftaustausch zwischen dem Aufnahmeraum 11.1 und dem Luftführungskanal 15 zu ermöglichen. Anstatt einer Bohrung kann auch jeder beliebig, sonstige Öffnungsquerschnitt verwirklicht sein. Gute Dämpfungsergebnisse werden erreicht, wenn die Querschnittsfläche des Kolbens 43 in dem dem Aufnahmeraum 11.1 zugewandten Endbereich zu dem Öffnungsquerschnitt der Öffnung 16 im Verhältnis 4000/1 steht.

Der Luftführungskanal 15 läuft in einem Hohlraum 17 aus, der von einem zylinderförmigen Endabschnitt des Dämpferkörpers 10 gebildet ist. Der Dämpferkörper 10 ist als Spritzgußteil gebildet. Die Innenwandung 18 des Zylinders 11 ist aus Entformungsgründen mit einem leichten Öffnungskonus ausgeführt, so dass sich der Aufnahmeraum 11.1 zum Bereich der dem Boden 13 gegenüberliegenden Eintrittsöffnung leicht erweitert.

Wie bereits vorstehend erwähnt wurde, ist in dem Aufnahmeraum 11.1 ein Gleitstück 40 geführt. Das Gleitstück 40 ist einteilig aufgeführt und umfasst eine Kolbenstange 42, den Kolben 43 und einen Balgabschnitt 44. Das Gleitstück 40 ist ebenfalls als Spritzgußteil ausgeführt und besteht aus einem weichelastischen Werkstoff, beispielsweise aus einem TPE-Material.

Die Kolbenstange 42 ist an der dem Balgabschnitt 44 gegenüberliegenden Seite an den Kolben 43 angeformt. Sie ist im Querschnitt zylinderförmig und ragt aus dem Aufnahmeraum 11.1 des Dämpferkörpers 11 heraus. Endseitig ist sie mit einem als Endkappe ausgebildeten Prallstück 41 versehen.

In alternativer Ausführung kann auch auf die an den Kolben 43 angeformte Kolbenstange 42 verzichtet werden. Die Kolbenstange 42 wird dann alleine von dem Stützkörper 30 gebildet.

Eine mechanische Verbindung zwischen dem Kolben 43 und dem Stützkörper 30 ist bei dem vorliegenden Aufbau nicht notwendig. Allerdings ist dann eine Zentrierung dieser beiden Bauteile vorteilhaft. Die Kolbenstange 42 ist von einem Stützkörper 30 umgeben. Dieser weist hierzu eine hohlzylindrische Aufnahme auf, die im Querschnitt an den Außenquerschnitt der Kolbenstange 42 angepasst ist. Sie ist von einem Mantelteil 31 gebildet. Das Material des Stützkörpers 30 ist biegesteif, so dass die Kolbenstange 42 ausgesteift wird. Wie die Fig. 1 deutlich erkennen lässt, stützt sich der Stützkörper 30 mit einem radial verbreiterten Absatz 32 auf dem Kolben 43 ab. Der Absatz 32 kann zur Führung des Kolbens 43 ausgenutzt werden. Dann ist er radial so verbreitert, dass er mit der Innenwandung 18 des Aufnahmeraumes 11.1 eine Führung bildet. Je nach Auslegung des Absatzes 32 kann insbesondere auch die Verkantungsgefahr für den Kolben 43 minimiert werden. Der Balgabschnitt 44 ragt in den Aufnahmeraum 11.1 hinein. Er ist als Hohlzylinder mit vorzugsweise gleich bleibender Wandstärke ausgeführt, so dass er um seinen Umfang gleiche Werkstückeigenschaften, insbesondere ein einheitliches Dehnverhalten aufweist. Die Wandung kann aber auch ballig oder zur Erreichung einer variierenden Kraft mit veränderlichem Querschnitt ausgeführt werden. Beispielsweise kann ein Querschnitt mit vermindertem Querschnitt verwendet sein. An seinem freien offenen Ende weist der Balgabschnitt 44 ein umlaufendes Dichtelement 45 auf, das mit einer Dichtlippe an der Innenwandung 18 des Aufnahmeraumes 11.1 dichtend anliegt. Das Dichtelement 45 ist dabei so ausgeführt, dass es über den gesamten Gleitbereich dichtet und aufgrund seiner Materialelastizität den Öffnungskonus des Aufnahmeraumes 11.1 ausgleicht.

Die Detailansicht gemäß Fig. 2 lässt die exakte Ausführung des Dichtelementes 45 genau erkennen. Der Balgabschnitt 44 umgibt eine Federaufnahme 46, in die eine Feder 50 eingestellt ist. Dabei ist die Federaufnahme 46 so dimensioniert, dass sie ein Ausknicken der Feder 50 verhindert.

Die Feder 50 stützt sich mit ihrem einen Ende an dem Kolben 43 ab. Das andere Federende legt sich an den Boden 13 an. Die Feder 50 ist über die Federführung 14 gestellt, die ebenfalls ein Ausknicken der Feder 50 verhindert. Die Federaufnahme 46 ist so ausgebildet, dass die Federführung 14 und die Feder 50 beim Einschieben des Gleitstückes 40 darin Platz finden und die Kolbenbewegung dabei nicht behindert wird.

Zur Fixierung des Gleitstückes 40 in der in Fig. 1 dargestellten ausgefahrenen Endstellung dient ein Anschlagelement 20. Dieses ist als Ring ausgeführt und weist an seinem Außenumfang einen umlaufenden wulstförmigen Rastansatz 21 auf. Das Anschlagelement 20 weist eine hohlzylindrische Durchführung 22 auf, durch die das Mantelteil 31 des Stützkörpers 30 hindurchgeführt ist. Dabei ist der Außendurchmesser des Mantelteils 31 auf den Innendurchmesser der Durchführung 22 angepasst, so dass sich eine stabile Linearführung für den Stützkörper 30 ergibt. Dabei ist die Materialpaarung zwischen dem Stützkörper 30 und dem Anschlagelement 20 so gewählt, dass sich eine leichtgängige Lagerung ergibt. Das Anschlagelement 20 kann bei der Montage über eine Einführerweiterung 19.3 des Dämpferkörpers 10 leicht in den Aufnahmeraum 11.1 eingeführt werden. Die Einführungsbewegung wird dabei mittels eines Absatzes 19.1 des Dämpferkörpers 10 begrenzt. In seiner Montagestellung rastet das Anschlagelement 20 mit seinem Rastansatz 21 in die Rastaufnahme 19.2 ein.

In der in Fig. 1 gezeigten Endstellung stützt das Anschlagelement 20 den Stützkörper 30 an dem Absatz 32 und damit den Kolben 43 gegen die Vorspannung der Feder 50 ab.

Nachfolgend soll kurz die Funktionsweise des Anschlagdämpfers beschrieben werden, der an beispielsweise einem Möbelstück mit einer anscharnierten Klappe zum Einsatz kommt.

Üblicherweise hat der Möbelkorpus des Möbelstücks eine Aufnahmebohrung, in die der Dämpferkörper 10 mit seiner zylindrischen Außenkontur eingesetzt werden kann. Dabei schlägt der Flansch 12 des Dämpferkörpers 10 an dem Möbelkorpus im Bereich der Aufnahmebohrung an.

Die sich schließende Klappe trifft zunächst auf das Prallstück 41 der Kolbenstange 42 auf. Aufgrund der elastischen Materialeigenschaften des Prallkörpers 41 wird das mechanische Aufprallgeräusch der Klappe kompensiert. Abhängig von der Auftreffenergie der Klappe wird der Prallkörper 41 verformt. Durch starken Aufprall wird der Prallkörper 41 vollständig in das Mantelteil 31 hinein verformt und die Klappe kommt in Kontakt mit dem freien Ende des Mantelteils 31. Über die Kolbenstange 42 bzw. das Mantelteil 31 wird die Kraft auf den Kolben 43 übertragen. Die ringförmige Anlage des Absatzes 32 an dem Kolben 43 sichert dabei eine gleichmäßige Krafteinleitung. Je nach Stärke der Aufprallenergie kann ein Energieteil infolge der elastischen Verformung des Kolbens 43 gedämpft werden. Der Kolben 43 wird in den Aufnahmeraum 11.1 hinein verschoben. Dabei baut sich ein Druck im Aufnahmeraum 11.1, unterstützt durch die Dichtwirkung der Dichtung 45 auf. Der Druck wird gleichzeitig über die Öffnung 16 abgebaut. Geschieht der Druckaufbau in kurzer Zeitdauer, so erfolgt der Druckabbau jedoch nicht in dem Maße wie er über die Öffnung 16 abgebaut wird.

Es entsteht ein dämpfender Überdruck im Aufnahmeraum 11.1. Dieser Überdruck wirkt auf den Balgabschnitt 44. Da in dem Zwischenraum zwischen der Innenwandung 18 und der Außenfläche des Balgabschnittes 44 Umgebungsdruck herrscht, entsteht ein Druckgefälle. Dieses bläht den Balgabschnitt 44 auf, so dass er sich an die Innenwandung 18 anlegt. Er unterstützt dabei die Dämpfung aufgrund der Gleitreibung. Aufgrund der weichelastischen Materialeigenschaft des Balgabschnittes 44 ist die Reibung entsprechend groß.

Wenn das Druckgefälle absinkt, kehrt der Balgabschnitt 44 wieder in seine Ausgangsposition zurück. Nach einer Entlastung der Kolbenstange 42 kehrt der Kolben 43 wieder, unterstützt durch die Feder 50 in seine Ausgangsstellung gemäß Fig. 1 zurück. Dabei wird Umgebungsluft über die Öffnung 16 in den Aufnahmeraum 11.1 eingesaugt.

Die Öffnung 16 ist so dimensioniert, dass folgende Eigenschaften des Anschlagdämpfers erfüllt sind:
- kontrollierter, langsamer Druckabbau zur Erreichung einer guten Dämpfung
- schneller Druckausgleich bei der Rückstellbewegung des Kolbens 43

Diese Eigenschaften können mit den in dem Anspruch 8 beschriebenen Verhältnissen optimal erreicht werden.

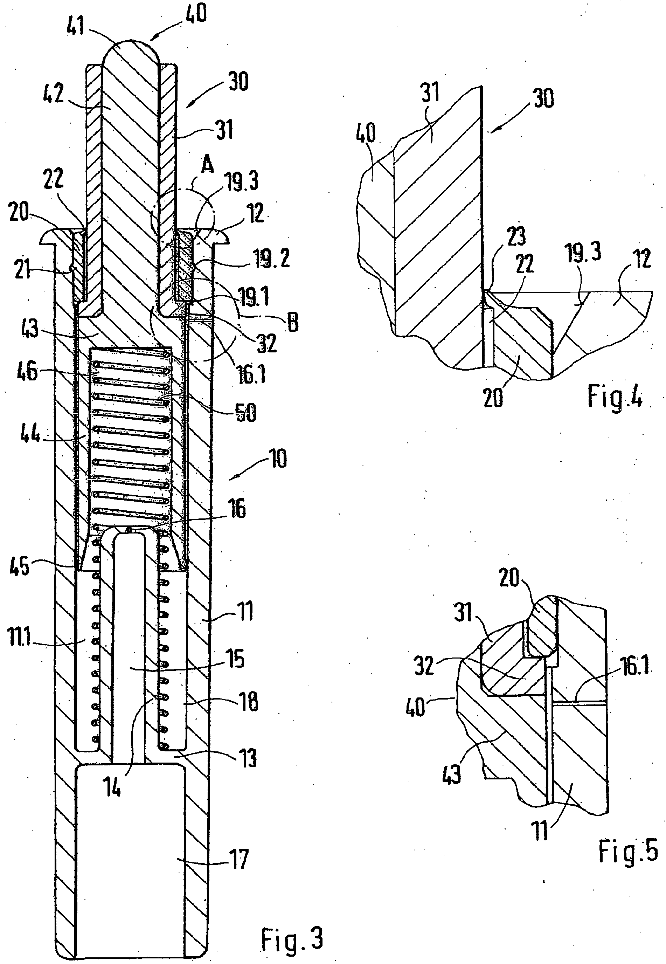

In den Fig. 3 bis 5 ist eine weitere Ausgestaltungsvariante eines Anschlagdämpfers gezeigt. Die dargestellte Konstruktion entspricht im Wesentlichen der Gestaltung gemäß den Fig. 1 und 2, weswegen auf die obigen Ausführungen verwiesen und nur auf die Unterschiede eingegangen wird.

Wie das Detail "A" gemäß Fig. 2 veranschaulicht, ist im Bereich des Anschlagelementes 20 eine Dichtung 23 vorgesehen, die dem Außenumfang des Mantelteiles 31 des Stützkörpers 30 abdichtet. Damit wird, in Zusammenarbeit mit der Dichtung 45 des Balgabschnittes 44 ein gegenüber der Umgebung abgedichteter Unterdruckraum 22 geschaffen. Zu diesem Zweck könnte die Dichtung 23 an einer beliebig anderen Stelle angeordnet sein.

Der Unterdruckraum steht über eine Öffnung 16.1 (siehe Fig. 5) in räumlicher Verbindung mit der Umgebung. Die Öffnung 16.1 weist zum kontrollierten Druckausgleich die in Anspruch 8 beschriebene Gestaltung auf. Beim Einschieben des Kolbens 43 bildet sich in dem Unterdruckraum 22 ein gegenüber der Umgebung geringerer Druck. Damit entsteht zwischen dem Aufnahmeraum 11.1 und dem Unterdruckraum 22 ein Druckgefälle, das zum Aufblähen des Balgabschnittes 44 mit starker Bremswirkung führt.

Abschließend soll erwähnt werden, dass die Funktion des Anschlagdämpfers erfindungsgemäß auch dann gewährleistet ist, wenn gemäß dem Ausführungsbeispiel nach Fig. 3 bis 5 ein Unterdruckraum 22 erzeugt ist und im Aufnahmeraum 11.1 stets Umgebungsdruck herrscht, die Öffnung 16 also entsprechend groß dimensioniert ist.

## Patentansprüche

1. Anschlagdämpfer mit einem Dämpferkörper (10), der einen Zylinder (11) aufweist, wobei in einem Aufnahmeraum (11.1) des Zylinders (11) ein Kolben (43) verstellbar geführt ist, wobei bei Verstellung des Kolbens (43) ein durch den im Aufnahmeraum (11.1) gebildeten Luftdruck eine auf den Kolben (43) wirkende Bremskraft ausgeübt wird, wobei der Aufnahmeraum (11.1) zum Abbau des Luftdruckes wenigstens eine Öffnung (16) aufweist, und wobei der Kolben (43) einen Balgabschnitt (44) aufweist, der abhängig von den Druckverhältnissen im Aufnahmeraum (11.1) in Wirkverbindung mit dem Zylinder (11) steht, wobei der Kolben (43) und der Balgabschnitt (44) einteilig miteinander verbunden sind,
**dadurch gekennzeichnet,**
**dass** die Kolbenstange (42) mittels eines Mantelteils (31) eines Stützkörpers (30) ausgesteift ist,
**dass** der Kolbenstange (42) der Stützkörper (30) zugeordnet ist oder diese einen solchen aufweist,
**dass** der Stützkörper (30) eine Anschlagseite aufweist, die außerhalb des Dämpferkörpers (10) angeordnet ist,
**dass** der Stützkörper (30) über einen Absatz (32) an dem Kolben (43) abgestützt ist dass die Kolbenstange (42) einteilig an den Kolben (43) angeformt ist,
**dass** die Kolbenstange (42) auf ihrer dem Kolben (43) abgewandten Seite ein Prallstück (41) aus einem thermoplastischen Elastomer oder ähnlichem weichelastischen Material bildet, und dass der Kolben (43) und der Balgsabschnitt (44) aus einem solchen Material bestehen.

2. Anschlagdämpfer nach Anspruch 1,
**dadurch gekennzeichnet,**
**dass** der Balgabschnitt (44) einen zylinderförmigen Teil aufweist, der im Abstand zur Innenwandung des Zylinders (11) gehalten ist, und
**dass** der von dem zylinderförmigen Teil umgebene Bereich einem Druckraum des Zylinders (11) zugeordnet ist.

3. Anschlagdämpfer nach Anspruch 2,
**dadurch gekennzeichnet,**
**dass** der zylinderförmige Teil des Balgabschnittes (44) eine Federaufnahme (46) bildet, in der eine Feder (50) zumindest teilweise aufgenommen ist, und dass die Feder (50) den Kolben (43) entgegen der Einschubbewegung des Kolbens (43) in den Zylinder (11) gegenüber dem Zylinder abstützt.

4. Anschlagdämpfer nach einem der Ansprüche 1 bis 3
**dadurch gekennzeichnet,**
**dass** der Balgabschnitt (44) ein angeformtes Dichtelement (45) trägt, das ein Druck- und einen Unterdruckraum des Zylinders (11) gegeneinander abdichtet.

5. Anschlagdämpfer nach Anspruch 4,
**dadurch gekennzeichnet,**
**dass** sowohl der Unterdruck- als auch der Druckraum mittels wenigstens einer Öffnung (16, 16.1) mit der Umgebung in luftleitender Verbindung stehen.

6. Anschlagdämpfer nach Anspruch 5,
**dadurch gekennzeichnet,**
**dass** wenigstens eine der Öffnungen (16,16.1) einen Durchmesser D < 0,2 mm, vorzugsweise < 0,1 mm, aufweist.

7. Anschlagdämpfer nach Anspruch 5oder 6,
**dadurch gekennzeichnet,**
**dass** das Verhältnis der Querschnittsfläche des Kolbens (43) in dem, dem Hohlraum zugewandten Bereich zu dem Öffnungsquerschnitt der Öffnung (38a, 38b) größer als 4000/1 ist.

8. Anschlagdämpfer nach einem der Ansprüche 1 bis 7, mit einem Dämpferkörper (10), der einen Zylinder (11) aufweist, wobei in einem Aufnahmeraum (11.1) des Zylinders (11) ein Kolben (43) verstellbar geführt ist, wobei bei Verstellung des Kolbens (43) ein durch den im Aufnahmeraum (11.1) gebildeten Luftdruck eine auf den Kolben (43) wirkende Bremskraft ausgeübt wird, wobei der Aufnahmeraum (11.1) zum Abbau des Luftdruckes wenigstens eine Öffnung (16) aufweist, und wobei der Kolben (43) einen Balgabschnitt (44) aufweist, der abhängig von den Druckverhältnissen im Aufnahmeraum (11.1) in Wirkverbindung mit dem Zylinder (11) steht, eine Öffnung (16, 16.1) aufweist,
**dadurch gekennzeichnet,**
**dass** die Öffnung (16, 16.1) einen Durchmesser von D < 0,2 mm, vorzugsweise < 0,1 mm, aufweist und/oder
**dass** das Verhältnis der Querschnittsfläche des Kolbens (43) in dem, dem Aufnahmeraum (11.1) zugewandten Bereich zu dem Öffnungsquerschnitt der Öffnung (16, 16.1) größer als 4000/1 ist.

## Claims

1. An end-stop damper with a damper body (10), which has a cylinder (11), wherein in a receiving chamber (11.1) of the cylinder (11) a piston (43) is guided in a displaceable manner, wherein during the displacement of the piston (43) a braking force acting on the piston (43) is exerted by the air pressure formed in the receiving chamber (11.1), wherein the receiving chamber (11.1) has at least one opening (16) for reducing the air pressure, and wherein the piston (43) has a bellows section (44), which dependent on the pressure conditions in the receiving chamber (11.1) is actively connected with the cylinder (11), wherein the piston (43) and the bellows section (44) are connected with each other in one piece,
**characterized in**
**that** the piston rod (42) is braced by means of a shell part (31) of a supporting body (30), that the piston rod (42) is assigned to the supporting body (30) or the latter has such a piston rod,
**that** the supporting body (30) has an end-stop side, which is arranged outside of the damper body (10),
**that** the supporting body (30) is supported via a shoulder (32) on the piston (43),
**that** the piston rod (42) is integrally formed in one piece on the piston (43),
**that** the piston rod (42) on its side turned away from the piston (43) forms a baffle piece (41) made of a thermoplastic elastomer or similar soft elastic material, and that the piston (43) and the bellows section (44) consist of such a material.

2. An end-stop damper according to Claim 1,
**characterized in**
**that** the bellows section (44) has a cylindrical part, which is held at a distance from the inner wall of the cylinder (11), and that the area surrounded by the cylindrical part is assigned to a pressure chamber of the cylinder (11).

3. An end-stop damper according to Claim 2,
**characterized in**
**that** the cylindrical part of the bellows section (44) forms a spring seat (46), in which a spring (50) is at least partially accommodated, and that in relation to the cylinder the spring (50) supports the piston (43) counter to the insertion movement of the piston (43) into the cylinder (11).

4. An end-stop damper according to one of Claims 1 to 3,
**characterized in**
**that** the bellows section (44) supports an integrally molded sealing element (45), which seals a pressure chamber and a negative pressure chamber of the cylinder (11) against each other.

5. An end-stop damper according to Claim 4,
**characterized in**
**that** both the negative pressure chamber as well as the pressure chamber are in air-conducting contact with the surroundings by means of at least one opening (16, 16.1).

6. An end-stop damper according to Claim 5,
**characterized in**
**that** at least one of the openings (16, 16.1) has a diameter D < 0.2 mm, preferably <0.1 mm.

7. An end-stop damper according to Claim 5 or 6,
**characterized in**
**that** the ratio of the cross-sectional area of the piston (43) in the area facing the hollow space to the opening cross section of the opening (38a, 38b) is greater than 4000/1.

8. An end-stop damper according to one of Claims 1 to 7, with a damper body (10) which has a cylinder (11), wherein in a receiving chamber (11.1) of the cylinder (11) a piston (43) is guided in a displaceable manner, wherein during the displacement of the piston (43) a braking force acting on the piston (43) is exerted by the air pressure formed in the receiving chamber (11.1), wherein the receiving chamber (11.1) has at least one opening (16) for reducing the air pressure, and wherein the piston (43) has a bellows section (44), which dependent on the pressure conditions in the receiving chamber (11.1) is actively connected with the cylinder (11), has an opening (16, 16.1),
**characterized in**
**that** the opening (16, 16.1) has a diameter D < 0.2 mm, preferably <0.1 mm, and/or
**that** the ratio of the cross-sectional area of the piston (43) in the area facing the receiving chamber (11.1) to the opening cross section of the opening (16, 16.1) is greater than 4000/1.

## Revendications

1. Amortisseur avec un corps d'amortisseur (10), qui comprend un cylindre (11), un piston (43) étant guidé dans un espace de logement (11.1) du cylindre (11), une pression d'air générée dans l'espace de logement (11.1) exerçant, lors du déplacement du piston (43), une force de freinage qui agit sur le piston (43), l'espace de logement (11.1) comprenant, pour la diminution de la pression d'air, au moins une ouverture (16) et le piston (43) comprenant une portion à soufflets (44), qui est en liaison fonctionnelle avec le cylindre (11) en fonction des conditions de pression dans l'espace de logement (11.1), le piston (43) et la portion à soufflets (44) étant reliés entre eux d'une seule pièce,
**caractérisé en ce que**
la tige de piston (42) est rigidifiée à l'aide d'une partie d'enveloppe (31) d'un corps d'appui (30),
le corps d'appui (30) est disposé sur la tige de piston (42) ou celle-ci comprend un tel élément,
le corps d'appui (30) comprend un côté de butée qui se trouve à l'extérieur du corps d'amortisseur (10),
le corps d'appui (30) s'appuie, à l'aide d'un épaulement (32), contre le piston (43),
la tige de piston (42) est moulée d'une seule pièce avec le piston (43),
la tige de piston (42) forme, sur son côté opposé au piston (43), une pièce d'impact (41) constituée d'un élastomère thermoplastique ou d'un matériau élastique souple similaire et le piston (43) et la portion à soufflets (44) sont constitués du même matériau.

2. Amortisseur selon la revendication 1,
**caractérisé en ce que**
la portion à soufflets (44) comprend une partie cylindrique qui est maintenue à une certaine distance des parois internes du cylindre (11) et
la zone entourée par la partie cylindrique correspond à un espace de pression du cylindre (11).

3. Amortisseur selon la revendication 2,
**caractérisé en ce que**
la partie cylindrique de la portion à soufflets (44) forme un logement de ressort (46), dans lequel un ressort est logé au moins partiellement et **en ce que** le ressort (50) soutient le piston (43) contre le mouvement d'insertion du piston (43) dans le cylindre (11) par rapport au cylindre.

4. Amortisseur selon l'une des revendications 1 à 3,
**caractérisé en ce que**
la portion à soufflets (44) supporter un élément d'étanchéité moulé (45), qui étanchéifie un espace de pression et un espace de dépression du cylindre (11) entre eux.

5. Amortisseur selon la revendication 4,
**caractérisé en ce que**
l'espace de dépression ainsi que l'espace de pression sont en liaison d'air avec l'environnement à l'aide d'au moins une ouverture (16, 16.1).

6. Amortisseur selon la revendication 5,
**caractérisé en ce que**
au moins une des ouvertures (16, 16.1) présente un diamètre D < 0,2 mm, de préférence < 0,1 mm.

7. Amortisseur selon la revendication 5 ou 6,
**caractérisé en ce que**
le rapport entre la surface de section transversale du piston (43), dans la zone orientée vers l'espace creux, et la section transversale de l'ouverture (38a, 38b), est supérieur à 4000/1.

8. Amortisseur selon l'une des revendications 1 à 7, avec un corps d'amortissement (10), qui comprend un cylindre (11), un piston (43) étant guidé de manière mobile dans un espace de logement (11.1) du cylindre (11), une pression d'air générée dans l'espace de logement (11.1) exerçant, lors du déplacement du piston (43), une force de freinage qui agit sur le piston (43), l'espace de logement (11.1) comprenant, pour la diminution de la pression d'air, au moins une ouverture (16) et le piston (43) comprenant une portion à soufflets (44), qui est en liaison fonctionnelle avec le cylindre (11) en fonction des conditions de pression dans l'espace de logement (11.1), comprenant une ouverture (16, 16.1),
**caractérisé en ce que**
l'ouverture (16, 16.1) présente un diamètre D < 0,2 mm, de préférence < 0,1 mm et/ou
le rapport entre la surface de section transversale du piston (43), dans la zone orientée vers l'espace de logement (11.1), et la section transversale de l'ouverture (16, 16.1), est supérieur à 4000/1.
